Europäisches Patentamt

European Patent Office

Office européen des brevets

(19)

(11) Veröffentlichungsnummer: **0 305 554**

**A2**

(12) **EUROPÄISCHE PATENTANMELDUNG**

(21) Anmeldenummer: **87110163.0**

(22) Anmeldetag: **09.12.83**

(51) Int. Cl.⁴: **H04B 9/00 , H04L 11/16**

(30) Priorität: **14.12.82 DE 3246241**

(43) Veröffentlichungstag der Anmeldung:
**08.03.89 Patentblatt 89/10**

(60) Veröffentlichungsnummer der früheren
Anmeldung nach Art. 76 EPÜ: **0 117 916**

(84) Benannte Vertragsstaaten:
**DE FR GB IT**

(71) Anmelder: **Siemens Aktiengesellschaft Berlin
und München
Wittelsbacherplatz 2
D-8000 München 2(DE)**

(72) Erfinder: **Moustakas, Steven, Dr.
Schellingstrasse 19
D-8000 München 40(DE)**
Erfinder: **Witte, Hans-Hermann, Dr.
Hippelstrasse 15
D-8000 München 82(DE)**

(54) **Optischer Stern-Bus mit aktivem Koppler.**

(57) Es wird ein optischer Stern-Bus mit aktivem Koppler beschrieben, bei dem am Eingang des Kopplers eine optisch-elektrische Wandlung vorgenommen wird. Es soll eine spezielle Schaltung für einen solchen Stern-Bus angegeben werden, die für alle Teilnehmer nur noch eine zentrale Kollisions-Schaltung erforderlich macht. Dazu wird an einem Ausgang des Kopplers wieder eine elekktrisch-optische Wandlung vorgenommen und im Koppler selbst ist eine zentrale Kollisions-Erkennungsschaltung (KE) vorgesehen, die beim Feststellen einer Kollision ein JAM-Signal erzeugt, das dann anstelle der Datensignale am Ausgang des Kopplers erscheint.

FIG 1

EP 0 305 554 A2

## Optischer Stern-Bus mit aktivem Koppler

Die vorliegende Erfindung betrifft nach dem Oberbegriff des Patentanspruchs 1 einen optischen Stern-Bus mit aktivem Koppler.

In asynchron arbeitenden Datenbussen treten Kollisionen auf. Diese sollen sicher, möglichst schnell und mit wenig Aufwand erkannt werden. In optischen Bussen, in denen die Daten passiv und rein optisch über einen Stern-Koppler verteilt werden, muß in jedem Teilnehmer eine Schaltung zur Erkennung von Kollisionen und zur Erzeugung von Signalen, die eindeutig in allen Teilnehmern das Auftreten einer Kollision anzeigen (JAM-Signale) vorhanden sein.

Auf der OFC-Konferenz, April 1982, Phoenix, Ar. ist über einen Stern-Bus der eingangs genannten Art berichtet worden. Bei diesem Stern-Bus wird im zentralen aktiven Sternkoppler eine optisch-elektrische Wandlung vorgenommen. Auf der Empfängerseite des Kopplers sind soviele optisch-elektrische Wandler vorgesehen, wie es Teilnehmer am Bus gibt. Als Botschaft bei Erkennung einer Kollision im Koppler wird ein optisches Signal verwendet, das eine andere Frequenz hat, als es der Daten-Bitrate entspricht.

Eine spezielle Schaltung für einen aktiven Stern-Bus, die für alle Teilnehmer nur noch eine zentrale Kollisions-Schaltung erforderlich macht, ist so ausgebildet, daß am Eingang des Kopplers eine optisch-elektrische Wandlung vorgenommen wird und daß an einem Ausgang des Kopplers wieder eine elektrisch-optische Wandlung vorgenommen wird und daß im Koppler selbst eine zentrale Kollisions-Erkennungsschaltung vorgesehen ist, die beim Feststellen einer Kollision ein bestimmtes, unter den Datensignalen nicht vorkommendes Signal (JAM-Signal) erzeugt, das dann anstelle der Datensignale am Ausgang des Kopplers erscheint.

Die zentrale Kollisions-Erkennungsschaltung kann nach dem Prinzip der Pegelbewertung arbeiten. Dies ist möglich, weil die Leistungsschwankungen am Eingang eines aktiven Sternkopplers praktisch zu null gemacht werden können.

Die wesentlichen Merkmale des erfindungsgemäßen optischen Stern-Busses mit aktivem Koppler gehen aus dem kennzeichnenden Teil des Patentanspruchs 1 hervor.

Bevorzugte und vorteilhafte Ausgestaltungen eines erfindungsgemäßen Stern-Busses sind so ausgebildet, daß die Kollisions-Erkennungsschaltung an ihrem Eingang zwei Schwellwertkomparatoren aufweist, denen die dem Eingang des Kopplers zugeführten optischen Signale in Form elektrischer Signale zuführbar sind und deren Schwellwerte so bemessen sind, daß ein Komparator stets beim Eintreffen eines Signals anspricht, während der andere Komparator nur dann anspricht, wenn mindestens zwei Signale überlagert eintreffen. Zur Unterscheidung von wirklichen Kollisionen von Übertragungsfehlern, durch die der andere Komparator auch im Falle einer Nicht-Kollision ansprechen würde, kann eine Übertragungsfehler-Erkennungsschaltung vorgesehen sein, die beim Feststellen eines Übertragungsfehlers das Aussenden eines JAM-Signals unterbindet.

Der aktive Koppler eines solchen Stern-Busses benötigt zwei Wandlungen, eine optisch-elektrische Wandlung, bei welcher optische Signale in elektrische Signale umgewandelt werden, und eine elektrisch-optische Wandlung, bei welcher elektrische Signale wieder in optische Signale umgewandelt werden. Außerdem ist eine Stromversorgung erforderlich.

Das eine Kollision anzeigende JAM-Signal kann mit der gleichen Bitrate erzeugt werden, wie die Daten.

Ein optischer Stern-Bus mit doppelter Signalwandlung, wie dies beim oben beschriebenen Stern-Bus der Fall ist, weist den besonderen Vorteil auf, daß die Teilnehmerzahl am Bus prinzipiell unbegrenzt anwachsen kann, weil eine prinzipielle Begrenzung der Teilnehmerzahl aus Leistungsgründen beseitigt werden kann. Dies wird durch die im kennzeichnenden Teil des Patentanspruchs 1 angegebenen Merkmale ermöglicht.

Bevorzugte und vorteilhafte Ausgestaltungen eines erfindungsgemäßen Stern-Busses gemäß Anspruch 1 gehen aus den Unteransprüchen 2 bis 13 hervor.

Die Erfindung wird anhand der beigefügten Zeichnungen in der folgenden ausführlichen Beschreibung näher erläutert. In den Zeichnungen zeigen:

Figur 1 in schematischer Darstellung ein mit einem erfindungsgemäßen aktiven Stern-Bus aufgebautes Bussystem,

Figur 2 das Schaltbild eines erfindungsgemäßen Kollisions-Erkennungsschaltkreises, der nach der Pegelbewertung arbeitet,

Figur 3 das Schaltbild eines erfindungsgemäßen Senderteils,

Figur 4 in einem Impulsdiagramm über der Zeit t, die an verschiedenen Stellen des Bus-Systems erscheinenden Signale,

Figur 5a das Schaltbild einer ersten Variante eines erfindungsgemäßen Empfängerteils, bei welchem zur Dekodierung der verwürfelten eigentlichen Daten sogenannte Dummybits erforderlich sind, und

Figur 5b das Schaltbild einer zweiten Variante eines erfindungsgemäßen Sendersteils, bei dem zum Dekodieren der verwürfelten eigentlichen Daten keine Dummybits erforderlich sind.

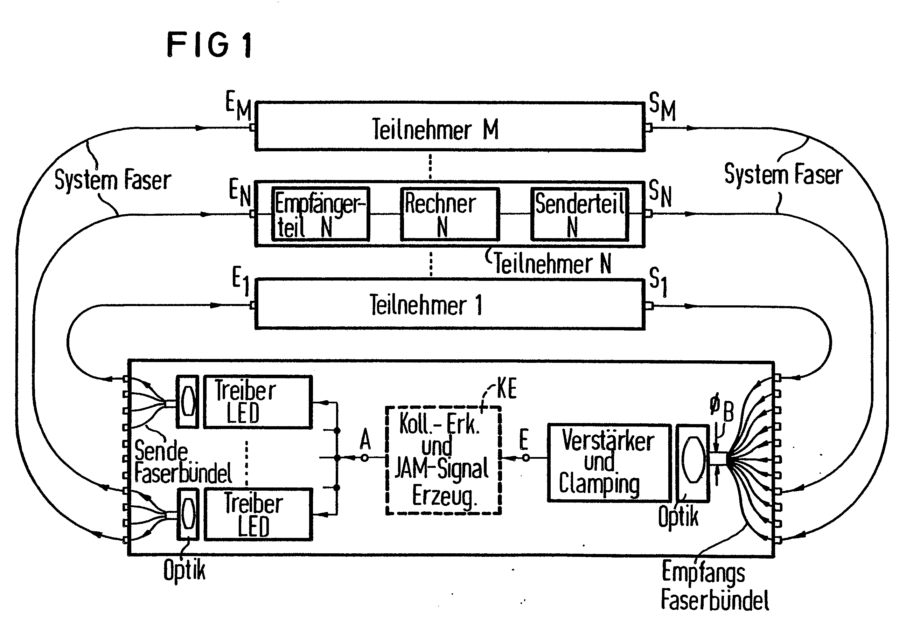

In dem in Figur 1 dargestellten Schema des aktiven optischen Stern-Busses sind die Teilnehmer über Lichtleitfasern mit dem aktiven Stern-Koppler verbunden. Auf der Empfangsseite bzw. am Eingang des Kopplers koppeln die sendeseitigen Fasern der Teilnehmer an ein eingangsseitiges Lichtleitfaserbündel. Am einen Ende dieses Lichtleitfaserbündels sind die Fasern zu einem Stab verschmolzen. Die Stirnfläche dieses Stabes kann über eine geeignete Optik auf die lichtempfindliche Fläche S eines Detektors oder mehrerer Detektoren, beispielsweise eine PIN-Diode oder APD abgebildet werden, welche die zugeführten optischen Signale in elektrische Signale umwandeln.

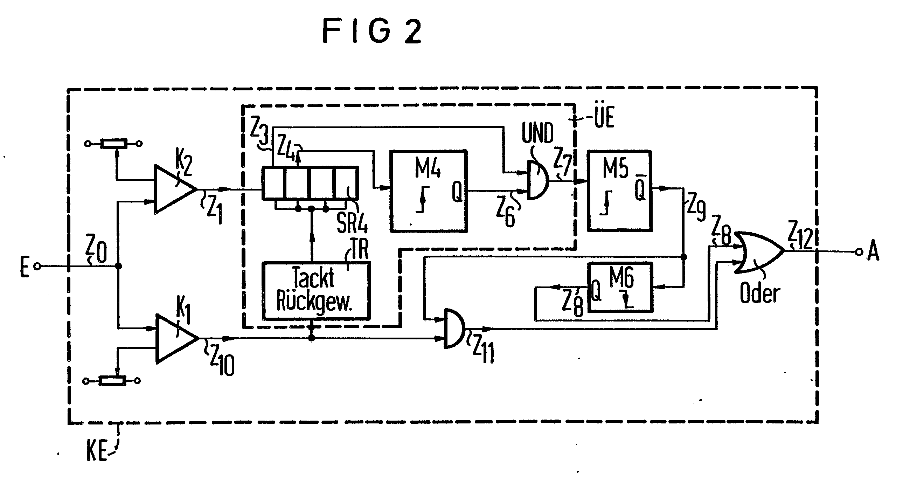

Das verstärkte elektrische Signal passiert noch eine Clamp-Schaltung, die erreicht, daß sich die Signale mit konstantem Pegel potentialmäßig möglichst wenig verschieben. Die elektrischen Signale gelangen dann bei E in die in Figur 2 dargestellte Kollisions-Erkennungs-schaltung, welche die Kollisionen, d.h. die Überlagerung von mindestens zwei Bitströmen erkennt und im Falle einer solchen Kollision ein JAM-Signal erzeugt. Ein JAM-Signal ist ein Bitmuster, das im verwürfelten Bitmuster der Daten nicht vorkommen und daher als ein Kollisions-Signal erkannt werden kann.

Am Ausgang A der Kollisions-Erkennungsschaltung erscheinen im Falle einer Nicht-Kollision die gleichen Daten wie am Eingang E und im Falle einer Kollision erscheint das JAM-Signal.

In Verbindung mit dem LED-Treiber und dem elektrisch-optischen Wandler werden die elektrischen Daten aus A optisch umgesetzt und über die Lichtleitfasern den Empfängern der Teilnehmer zugeführt.

Am Eingang der Kollisions-Erkennungsschaltung gemäß Figur 2 befinden sich zwei Schwellwert-Komparatoren, denen die elektrischen Signale über E zugeführt werden. Die Schwellwerte der beiden Komparatoren sind so bemessen, daß der Komparator K2 nur dann ein Signal abgibt, wenn mindestens zwei Signale überlagert sind. Der Komparator K1 spricht dagegen bereits an, wenn Signale aus nur einem Teilnehmer ankommen.

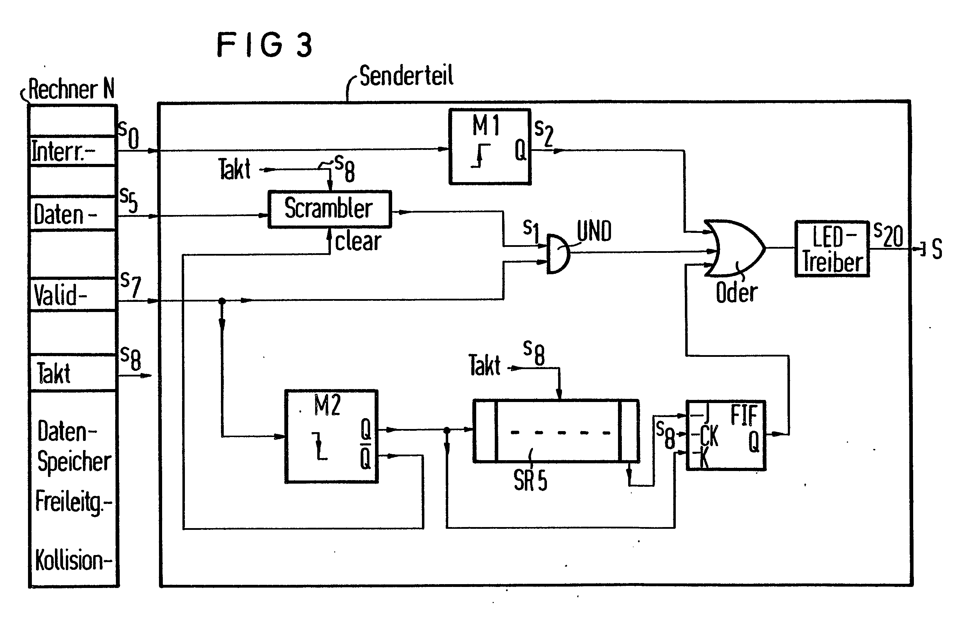

Um Übertragungsfehler, durch die K2 auch im Falle einer Nicht-Kollision ansprechen würde, von wirklichen Kollisionen zu unterscheiden, ist die strichpunktiert eingerahmte Übertragungsfehler-Erkennungsschaltung ÜE vorgesehen. Eine derartige Schaltung ist bereits in der älteren Patentanmeldung P 32 24 664.1 (VPA 82 P 1509) vorgeschlagen worden und dort ist auch ihre Wirkungsweise beschrieben (siehe dort insbesondere Fig. 3 und zugehörige Beschreibung). Die Schaltung ÜE besteht im wesentlichen aus einem mit dem Komparator K2 verbundenen Schieberegister S.R.4, einem monostabilen Multivibrator M.4 und einem UND-Gatter. Der Takt zum Betrieb des Schieberegisters S.R.4 wird von einer Taktrückgewinnungsschaltung TR1 geliefert, die aus den von den Teilnehmern gelieferten Signalen den Takt zurückgewinnt.

Wenn eine Kollision durch K2 erkannt wird, wird der Ausgang $Z_{11}$ des zweiten vorhandenen UND-Gatters auf den Binärwert '0' gesetzt und an einer Ausgangsleitung $Z_8$ bzw. $Z_{12}$ eines monostabilen Multivibrators M6 bzw. eines ODER-Gatters erscheint das JAM-Signal, das beispielsweise eine ununterbrochene Folge von Bits des Binärwerts '1' ist, entsprechend der Zeitkonstanten des monostabilen Multiivibrators M5 in Figur 2. Diese Zeitkonstante wird etwa gleich der Umlaufzeit der Signale durch die Busstrecke gewählt. Das JAM-Signal wird länger gewählt als jede unter den verwürfelten Datensignalen vorkommende ununterbrochene Folge von Bits des entweder einen oder anderen Binärwerts.

Im optisch-elektrischen Wandler des aktiven Kopplers nach Figur 1 will man mit möglichst wenig Detektoren auskommen. Es soll hier abgeschätzt werden, wie viele Faserstirnflächen ihr Licht gleichzeitig auf eine vorgegebene Detektorfläche lenken können. Es sei angenommen, daß M Fasern an einem Ende zu einem Zylinderstab verschmolzen sind, so daß die Stirnfläche $F_B$ des Stabes mit dem Durchmesser $\emptyset_B$ gleich der Summe der M Faserstirnflächen ist. Die Stirnfläche einer Einzelfaser sei mit $F_E$ und ihr Durchmesser $\emptyset_E$ bezeichnet. Dann gilt $\emptyset_B = \sqrt{M}\emptyset_E$. Wenn der Durchmesser $\emptyset_E$ der Einzelfaser beispielsweise 140 µm und die lichtempfindliche Fläche des Detektors 1 mm² betragen, so gelangt alles Licht aus der Stirnfläche eines beispielsweise rechteckigen Stabes, der aus 51 verschmolzenen Fasern entstanden ist, auf den Detektor, wenn der Detektor unmittelbar vor der Stabstirnfläche stumpf angekoppelt ist. Dieses Verhalten ist unabhängig von der numerischen Apertur der Fasern. Will man das Licht von noch mehreren Fasern auf einen Detektor konzentrieren, so ist die gegenüber 1 mm² vergrößerte Stabstirnfläche beispielsweise über eine Optik auf den Detektor verkleinert abzubilden. Je nach Zahl und numerischer Apertur der Fasern und dem Aufwand bei der Optik muß man eventuell weitere Detektoren dazuschalten.

Die bei A auftretenden elektrischen TTL-Signale werden durch den elektrisch-optischen Wandler, beispielsweise eine lichtemittierende Diode (LED) oder eine Laserdiode (LD) wieder in optische Impulse umgewandelt. Die Zahl der dafür nötigen Wandler hängt im wesentlichen von der Art des Wandlers und der Zahl der Teilnehmer ab. Es soll gezeigt werden, daß man für etwa 500 Teilnehmer bei Verwendung von beispielsweise Burrus-LED's im System eine LED im aktiven Koppler benötigt: Es sei angenommen, daß man durch eine stumpfe Ankopplung von einer LED beispielsweise 100 $\mu$W in eine Stufenprofilfaser einkoppeln kann. Die gesamte abgestrahlte Leistung einer Burrus-LED beträgt bei einer Lichtwellenlänge $\lambda$ von 850 nm jedoch mindestens 5 mW. Aus der Sicht der Leistungsbilanz könnten also 50 Stufenindexfasern mit je 100 $\mu$W Leistung von einer LED angeregt werden. Vorteilhaft gegenüber dem Fall des passiven Stern-Busses ist es nun, daß am Ausgang des aktiven Stern-Kopplers ein Bündel von Fasern an die Sende-Diode ankoppelt. Um die Gestamtstrahlung der LED besser auszunutzen, verkleinert man durch beispielsweise eine Optik den Abstrahlwinkel des Wandlers, der bei einer LED etwa ± 60° beträgt, soweit, bis der der numerischen Apertur einer Faser entsprechende Auffangwinkel der Fasern erreicht ist. Bei dieser Abbildung ist selbstverständlich das Abbild der strahlenden Fläche des Wandlers größer als die strahlende Fläche des Wandlers ist. Es wird, wie bei der elektrisch-optischen Wandlung ein Faserbündel an seinem einen Ende zu einem bei spielsweise runden Stab verschmolzen. Ist der Durchmesser $\emptyset_E$ einer Einzelfaser 140 $\mu$m, so beträgt der Querschnitt $F_B$ des Stabes bei einem Bündel von 50 Fasern $F_B = 0,77$ mm$^2$.

Es ist noch nachzuweisen, daß der Querschnitt $F'_B$ der abgebildeten LED-Fläche nicht größer als 0,77 mm$^2$ ist. Die Abbésche Sinusbedingung lautet im vorliegenden Fall:

$$F_{LED} \cdot \sin^2 60 = F'_B \cdot \sin^2 12,$$

wobei $F_{LED}$ bzw. $F'_B$ den Querschnitt der LED-Fläche bzw. den ihres Abbildes bedeuten, der Abstrahlwinkel der LED ± 60° beträgt, und die Faser eine numerische Apertur von 0,2 aufweist. Für $F_{LED}$ = $(0,05)^2 \pi/4 = 2 \cdot 10^{-3}$mm$^2$ ergibt sich $F'_B$ zu 0,04 mm$^2$. Für Fasern mit größerer numerischer Apertur als 0,2 ist $F_B$ noch kleiner als 0,04 mm$^2$.

Im Gegensatz zum passiven Stern-Bus treten auf dem Weg vom Ausgang des aktiven Stern-Kopplers bis zu den Empfängern der Teilnehmer nur noch Verluste durch Stecker und Faserdämpfung - zusammen etwa 3 dB - auf. Es möge die Empfindlichkeit der Empfänger in den Teilnehmern, z.B. 0,5 $\mu$W betragen. Dann kann man die Leistung von 100 $\mu$W pro Faser noch auf etwa 100 Fasern aufteilen. Es ergibt sich damit, daß im angenommenen Beispiel etwa 5000 Teilnehmer von einer im aktiven Koppler positionierten Burrus-Diode versorgt werden können, wenn man von Streu- und Absorptionsverlusten bei der Leistungsauffächerung absieht. Bei der Aufteilung der LEDLeistung auf die 5000 Fasern (mit je 1 $\mu$W Leistung) kann

man sinngemäß genauso verfahren, wie es oben für die Aufteilung der LED-Leistung auf 50 Fasern (mit je 100 $\mu$W Leistung) beschrieben ist. Wenn noch mehr Teilnehmer an den Bus angeschlossen werden sollen, ist entsprechend dieser Zahl die Anzahl der sendenden Dioden im aktiven Koppler zu erhöhen.

Auf der Sende- und Empfangsseite des aktiven Stern-Kopplers kann man gegebenenfalls auch auf eine abbildende Optik verzichten. Die M Fasern des Bündels werden an einem Ende verschmolzen und getapert bzw. verjüngt, so daß der Querschnitt des Stabes verkleinert wird. Auf der Empfangsseite des Kopplers wählt man die Stirnfläche des Stabes höchstens gleich der Detektorfläche und man positioniert diese Stirnfläche unmittelbar vor der Detektorfläche. Der Taper bzw. die Verjüngung darf nur so steil sein, daß die Strahlen weder in sich zurücklaufen, noch in die seitliche Umgebung austreten. Auf der Sendeseite des Kopplers sollte der Taper des Stabes möglichst so gestaltet sein, daß beim Übergang der Fasern des Lichtleitfaserbündels auf die SystemFasern, die zu den Teilnehmern führen, die Winkel der Lichtstrahlen flach genug geworden sind, so daß die Strahlen in den Systemfasern geführt werden.

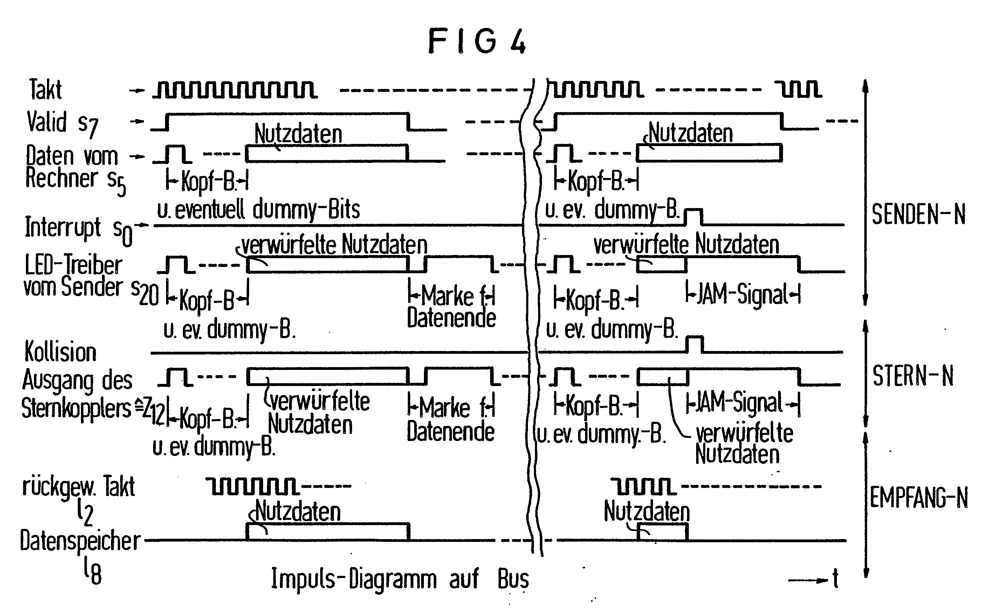

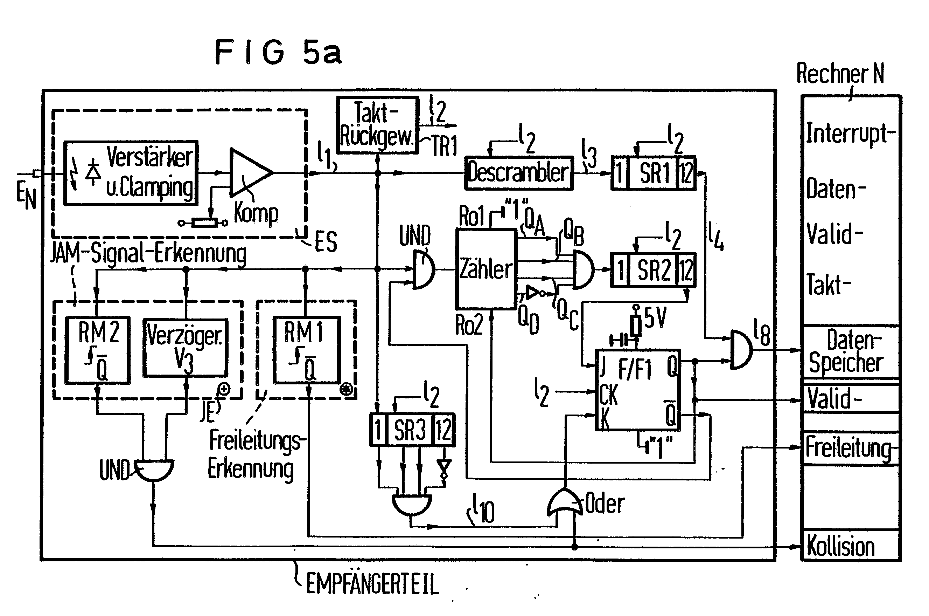

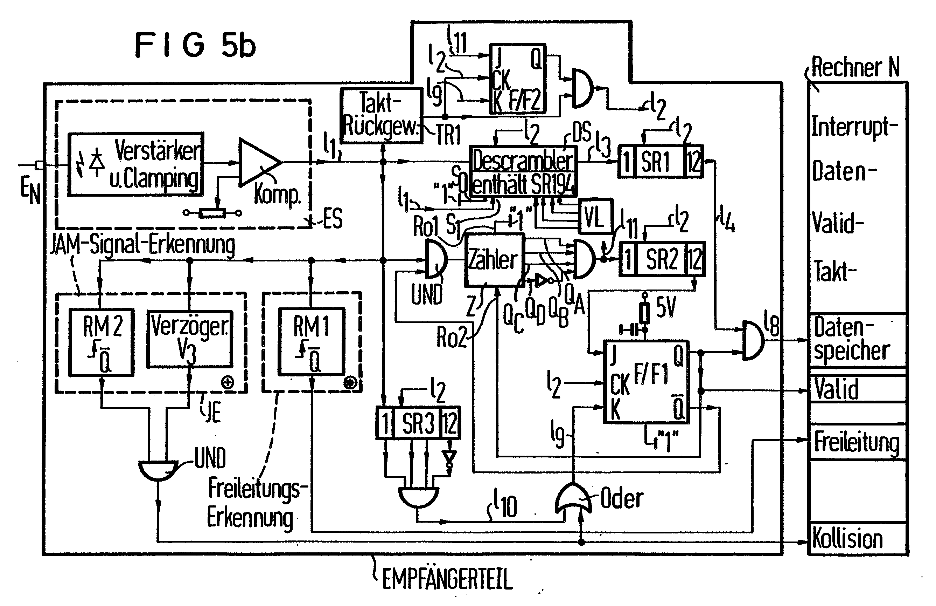

Im folgenden wird näher auf den Sender- und Empfängerteil eines Teilnehmers N des Bussystems nach Figur 1 eingegangen. Bei den Schaltungsentwürfen für den in Figur 3 dargestellten Senderteil und die in den Figuren 5a bzw. 5b dargestellten Empfängerteile ist davon ausgegangen, daß dem Senderteil vom Teilnehmer N, der ein Rechner sein soll, die Leitungen "Interrupt", "Daten", "Valid" und "Takt" zugeführt werden. Der Beginn des Datensendens, bei dem ein Datenpaket ausgesandt wird, fällt mit der Vorderflanke eines Valid- bzw. Gültigkeitssignals zusammen (siehe Figur 4), die ein Übergang von '0' nach '1' ist, und das Ende des ausgesandten Datenpaketes fällt mit der Rückflanke des gleichen Valid-Signals zusammen, die einem Übergang von '1' nach '0' entspricht. Jedes solche durch ein Valid-Signal begrenzte Datenpaket enthält die verwürfelten eigentlichen Nutzdaten sowie sog. Kopf-Bits und möglicherweise an die Kopf-Bits anschließend auch noch sog. Dummy-Bits, die später erklärt werden.

Die Kopf-Bits und gegebenenfalls Dummy-Bits sind den eigentlichen Daten vorangestellt, beginnen mit '1' und wechseln möglichst oft ihren Zustand (siehe Figur 4). Es handelt sich bei ihnen aber immer um das gleiche definierte Bitmuster. Die Länge der Kopf-Bits wird durch die Taktrückgewinnungsschaltung im Empfängerteil (siehe Figuren 5a und 5b) bestimmt.

Die Daten passieren einen Scrambler im Senderteil. Der Scrambler hat zwei Funktionen: Er muß

a) den Zustand "keine Daten senden", der durch eine Dauerfolge von '0' repräsentiert ist, von dem Zustand "Daten senden" unterscheiden, wobei die nicht verwürfelten Nutzdaten beliebige '0'-Folgen oder '1'-Folgen enthalten können, und

b) für die Taktrückgewinnung genügend viele Flankenwechsel sicherstellen.

Am Scrambler liegt ständig der Takt $s_8$. Jeweils beim Ende eines Datenpaketes, wenn $s_7$ auf '0' zurückgeht, wird Q von dem monostabilen Multivibrator M.2, der von der Rückflanke des Valid-Signals getriggert wird, gleich '0' und setzt den Scrambler in den Zustand Null ('0') zurück. Wenn keine Daten gesendet werden, bleibt der auf '0' zurückgesetzte selbstsynchronisierende Scrambler auf '0' gesetzt. Am Ende der Datenpakete erzeugt die Schaltung durch den monostabilen Multivibrator M.2, das durch den Takt $s_8$ getaktete Schieberegister S.R.5 und die bistabile Kippschaltung F/F (siehe Figur 3) eine Markierung des eigentlichen Datenpaketendes. Es wird z.B. eine '0' und elfmal eine '1' in ununterbrochener Reihenfolge erzeugt. Diese Markierungsbits des Datenpaketendes gehen nicht durch den Scrambler.

Wird ein Interrupt bzw. eine Unterbrechung durch $s_0$ = '1' ausgelöst, wird durch den monostabilen Multivibrator M.1 als JAM-Signal eine endliche, ununterbrochene Folge von '1', beispielsweise 30 mal hintereinander '1' erzeugt, genauso wie das JAM-Signal im aktiven Stern-Koppler durch den monostabilen Multivibrator 6 (siehe Figur 2) erzeugt wird. Durch Interrupt-Signale oder durch Erkennung von Kollisionen werden also JAM-Signale erzeugt, die von allen Teilnehmern erkannt werden und das weitere Datensenden stoppen. Am Ausgang $s_{20}$ des Senderteils nach Figur 3 erscheinen also in Abhängigkeit vom Valid-Signal und Interrupt-Signal die in Figur 4 dargestellten Bitmuster.

Im Empfängerteil werden nach der Verstärkung und dem sich an den Verstärker anschließenden Komparator wieder TTL-Impulse erzeugt. Der entsprechende Schaltkreis ist in den Figuren 5a und 5b mit ES bezeichnet. Aus den zugeführten Kopf-Bits wird der Takt zurückgewonnen. Wichtig ist es, daß am Ausgang $e_8$ nur die eigentlichen Daten erscheinen. Verwürfelte Kopf-Bits und gegebenenfalls Dummy-Bits sowie Ende-Markierungsbits müssen ausgesiebt werden. Dazu sind u.a. Verzögerungsglieder wie Schieberegister S.R.1, S.R.3 nötig. Wohldefinierte Verzögerungen erreicht man am besten durch getaktete Schieberegister. Zu Beginn des in den Empfängerteil einlaufenden Bitstroms ist jedoch noch kein Takt vorhanden, der ja erst durch die Kopf-Bits gewonnen werden muß. Da man das Bitmuster der verwürfelten Kopf-Bits kennt, kann durch einen Zähler das Ende der Kopf-Bits festgestellt werden. Dazu sind das Schiebegister S.R.2 und die bistabile Kippschaltung F/F1 und auch der Zähler vorgesehen. Nach dem Passieren der Kopf-Bits ist der Takt bezüglich der Nutzdaten eingephast und die Schieberegister können richtig arbeiten.

Zur Wiedergewinnung der Nutzdaten werden zwei Möglichkeiten angegeben. Die eine Möglichkeit arbeitet mit sog. Dummy-Bits (Figur 5a) und die andere Möglichkeit benötigt keine solchen Bits. Bei der ersten Möglichkeit enthalten die Datenpakete im Sender außer den Kopf-Bits und den Nutzdaten auch sog. Dummy-Bits, deren Anzahl größer als die Anzahl der Tiefe des im Scrambler und in dem zur Dekodierung verwendeten Descrambler verwendeten Schieberegisters ist. Ansonsten ist das Bitmuster der Dummy-Bits beliebig. Es darf durch sie nur nicht der bereits gewonnene Takt wieder verlorengehen. Der Takt $e_2$ liegt ständig am Descrambler. Die Dummy-Bits gewährleisten, daß der Descrambler richtig arbeitet, d.h. synchronisiert ist, wenn die verwürfelten Nutzdaten in den Descrambler einlaufen. Der Descrambler muß also vor Beginn der Nutzdaten nicht in einen definierten Ausgangszustand zurückgesetzt werden; bei $e_3$ erscheinen die Nutzdaten richtig.

Bei der anderen Möglichkeit, die in der Schaltung gemäß Figur 5b realisiert ist, sind im Datenstrom des Senders keine Dummy-Bits enthalten. Im Empfängerteil wird der Takt $e_2$ erst zu Be ginn der Nutzdaten auf den Descrambler aufgeschaltet. Durch die Verknüpfungslogik V.L. wird dafür gesorgt, daß der Descrambler beim Start genau auf das Bitmuster gesetzt wird, das in dem Scrambler zu dem Zeitpunkt enthalten ist, nachdem die Kopf-Bits den Scrambler passiert haben. Dadurch ist sichergestellt, daß auch ohne Dummy-Bits der Descrambler hinsichtlich der Nutzdaten richtig arbeitet; allerdings ist der Schaltungsaufwand etwas erhöht. Durch die Verknüpfungslogik V.L. wird beispielsweise für $s_1$ = '1' ein bestimmtes Bitmuster an die Paralleleingänge des im Scrambler enthaltenen Schieberegisters S.R.194 gelegt. Die Realisierung des richtigen zeitlichen Bezugs - daß nämlich der Takt von dem Descrambler sofort nach dem Rücksetzen weggenommen werden muß - zwischen $e_2$ und $e_{10}$ ist nicht eingezeichnet und muß durch entsprechende Verzögerungsglieder hergestellt werden.

Im Beispiel ist angenommen, daß die Markierung für das Ende der Datenpakete durch eine '0' und elfmal durch eine '1' in ununterbrochener Reihenfolge dargestellt ist. Daher haben die Schieberegister S.R.1, S.R.2 und S.R.3 eine Tiefe von 12 Bits. Weiterhin ist in dem Beispiel angenommen, daß in den verwürfelten Kopf-Bits sieben negative Flankenwechsel enthalten sind. Der Empfängerteil enthält außerdem eine JAM-Signal-Erkennungsschaltung JE, die an den Rechner einen Impuls abgibt, wenn ein JAM-Signal erkannt wird. Durch den retriggerbaren monostabilen Multivibrator R.M.1 wird der Bus auf den Freileitungs-Zustand abgefragt.

In den Schaltkreisen sind Verzögerungen durch GatterLaufzeiten nicht berücksichtigt. Die Schaltung nach Figur 3 bezüglich der Handhabung der Kopf-Bits, gegebenenfalls der Dummy-Bits und der Bits zur Markierung des Datenpaketendes sowie die Schaltungen nach den Figuren 5a und 5b zur Wiedergewinnung der Nutzdaten lassen sich sinngemäß auch auf den passiven Stern- Bus anwenden.

Die Vorteile eines aktiven gegenüber einem passiven Stern-Bus sind:

a) schnellere Kollisions-Erkennung;

b) es wird nur eine für alle Teilnehmer zentrale Kollisionserkennung benötigt;

c) keine Begrenzung der Teilnehmerzahl aus Leistungsgründen.

Die in den Figuren 2 bis 5b dargestellten Schaltungen können mit Bausteinen der Fa. Texas Instruments, wie sie beispielsweise aus "The TTL Data Book", Texas Instruments, fourth European Edition 1980, entnehmbar sind, aufgebaut werden.

**Ansprüche**

1. Optischer Stern-Bus mit einem aktiven Koppler, **dadurch gekennzeichnet,** daß am Ausgang des Kopplers eine elektrisch-optische Wandlung vorgenommen wird, und daß Ausgang des Kopplers ein Lichtleitfaserbündel vorgesehen ist, das an einem Ende zu einem Stab gebündelt oder verschmolzen ist, dessen Stirnfläche der Emissionsfläche eines lichtemittierenden Elements gegenüberliegt oder auch auf diese Fläche abgebildet ist.

2. Stern-Bus nach Anspurch 1, **dadurch gekennzeichnet,** daß eine Verkleinerung des Abstrahlwinkels des lichtemittierenden Elements soweit vorgenommen ist, daß der Auffangwinkel der Lichtleitfasern erreicht ist.

3. Stern-Bus nach Anspurch 1 oder 2, **dadurch gekennzeichnet,** daß das lichtemittierende Element eine Burrus-Biode oder eine Laserdiode ist.

4. Stern-Koppler nach einem der Ansprüch 1 bis 3, **dadurch gekennzeichnet,** daß der Stab am Ende des Faserbündels sich verjüngt.

5. Stern-Bus nach Anspruch 2 und 4, **dadurch gekennzeichnet,** daß der sich verjüngende Stab des Lichtleitfaserbündels am Ausgang des Kopplers so gestaltet ist, daß beim Übergang der Lichtleitfasern des Bündels auf zu Teilnehmern führende Lichtleitfasern die Winkel der Lichtstrahlen flach genug geworden sind, so daß die Strahlen in den Systemlichtleitfasern geführt werden und daß die Stirnfläche des Stabes der Emissionsfläche gegenüberliegt.

6. Stern-Bus nach einem der Ansprüche 1 bis 5, **dadurch gekennzeichnet,** daß am Eingang des Kopplers ein Lichtleitfaserbündel vorgesehen ist, das an einem Ende zu einem Stab gebündelt oder verschmolzen ist, dessen Stirnfläche der lichtempfindlichen Fläche eines Detektors gegenüberliegt oder auch auf diese Fläche abgebildet ist.

7. Stern-Bus nach Anspruch 6, **dadurch gekennzeichnet,** daß die Stirnfläche des den Detektor zugeordneten Stabes verkleinert auf die lichtempfindliche Fläche des Detektors abgebildet ist.

8. Stern-Bus nach Anspruch 6 oder 7, **dadurch gekennzeichnet,** daß der Stab am Ende des Lichtleitfaserbündels am Eingang des Kopplers sich verjüngt.

9. Stern-Bus nach Anspruch 2, **dadurch gekennzeichnet,** daß die Stirnfläche des Stabes eines Lichtleitfaserbündels am Eingang des Kopplers etwa gleich der lichtempfindlichen Flächen des Detektors ist, und diese Stirnfläche unmittelbar vor der lichtempfindlichen Fläche positioniert ist.

Stern-Bus nach einem der vorhergehenden Ansprüche, **dadurch gekennzeichnet,** daß am Eingang des Kopplers eine optisch-elektrische Wandlung vorgenommen wird, und daß im Koppler selbst eine zentrale Kollisions-Erkennungsschaltung (KE) vorgesehen ist, die beim Feststellen einer Kollision ein bestimmtes, unter den Datensignalen nicht vorkommendes Signal (JAM-Signal) erzeugt, das dann anstelle der Datensignale am Ausgang des Kopplers erscheint.

11. Stern-Bus nach Anspruch 10, **dadurch gekennzeichnet,** daß die zentrale Kollisions-Erkennungsschaltung nach dem Prinzip der Pegelbewertung arbeitet.

12. Stern-Bus nach Anspruch 11, **dadurch gekennzeichnet,** daß die Kollisions-Erkennungsschaltung an ihrem Eingang zwei Schwellwertkomparatoren (K1, K2) aufweist, denen die dem Eingang des Kopplers zugeführten optischen Signale in Form elektrischer Signal zuführbar sind und deren Schwellwerte so bemessen sind, daß ein Komparator (K1) stets beim Eintreffen eines Signals anspricht, während der andere Komparator (K2) nur dann anspricht, wenn mindestens zwei Signale überlagert eintreffen.

13. Stern-Bus nach einem der Ansprüche 10 bis 12, **dadurch gekennzeichnet,** daß zur Unterscheidung von wirklichen Kollisionen von Übertragungsfehlern, durch die der andere Komparator (K2) auch im Falle einer Nicht-Kollision ansprechen würde, eine Übertragungsfehler-Erkennungsschaltung (ÜE) vorgesehen ist, die beim Feststellen eines Übertragungsfehlers das Aussenden eines JAM-Signals unterbindet.

# FIG 1

System Faser

Teilnehmer M

Teilnehmer N

Teilnehmer 1

Senderteil N

Rechner N

Empfänger-teil N

$S_M$  $S_N$  $S_1$

$E_M$  $E_N$  $E_1$

System Faser

Verstärker und Clamping

Koll.-Erk. und JAM-Signal Erzeug.

KE

Treiber LED

Treiber LED

Optik

$\phi_B$

Empfangs Faserbündel

Sende Faserbündel

Optik

A

E

FIG 2

FIG 3

# FIG 4

Impuls-Diagramm auf Bus

# FIG 5a

F I G 5b